# EUROPÄISCHE PATENTANMELDUNG

(11) **EP 2 724 831 A1**
(43) Veröffentlichungstag der Anmeldung: **30.04.2014**
(21) Anmeldenummer: 13004686.5
(22) Anmeldetag: 26.09.2013
(51) Int. Cl.: B26F 1/38, A21C 11/10, B26F 1/46

(54) **Brotstanzenset**

(30) Priorität: 05.10.2012 DE 102012019531
(71) Anmelder: Domzal, Günter, 13591 Berlin (DE)
(72) Erfinder: Domzal, Günter, 13591 Berlin (DE)
(74) Vertreter: Patentanwaltskanzlei Liermann-Castell & Kollegen

(57) **Zusammenfassung**

Die Erfindung betrifft ein Brotstanzenset (1) aufweisend mindestens zwei Brotstanzen (2, 3, 4) zum manuellen Austanzen von randlosen Brotscheiben (13b) aus einer Brotscheibe (13) mit Brotrinde (13a), wobei die einzelnen Brotstanzen (2, 3, 4) jeweils einen Handgriff (5, 6, 7) aufweisen.

Erfindungsgemäß ist vorgesehen, dass die Form der einzelnen Brotstanzen (2, 3, 4) dem Umfangsverlauf eines Profils eines Brotlaibs (10) in Form eines abgeflachten bis indentierten Ovals entspricht und wobei die Brotstanzen (2, 3, 4) eine unterschiedliche Größe aufweisen.

Dadurch ist das Befreien einer Brotscheibe von Brotrinde oder Brotkruste einerseits angenehm und kultiviert durchzuführen und andererseits führt dies zu ästhetisch schönen und appetitlichen Brotscheiben.

## Beschreibung

Brotstanzenset bestehend aus mindestens zwei Brotstanzen zum manuellen Austanzen von randlosen Brotscheiben aus einer Brotscheibe mit Brotrinde/Brotkruste, wobei die einzelnen Brotstanzen jeweils einen Handgriff aufweisen.

Brot wird in verschiedenen Formen gebacken und konsumiert. Den bei weitem größten Anteil an verschiedenen Formen bildet neben dem Kastenbrot das Brot in Laibform. Die Laibform zeichnet sich durch eine im Wesentlichen abgeflachte ovale Form aus, die beim Backen eine Brotrinde/Brotkruste bildet. Die Brotkruste ist je nach Art des Backens vergleichsweise dünn und leicht wie bei den hellen Broten oder sie ist eher dick und krustig, wie bei den Steinofenbroten. Die Brotrinde/Brotkruste ist ein wesentlicher Geschmacksträger des Brotes, weil die Röststoffe in der Brotkante in der Regel einen intensiveren Geschmack erzeugen als das Brotinnere. Aber auch bei gewürzten Broten hat die Brotrinde/Brotkruste einen nicht unwesentlichen Beitrag zum Geschmack und zur Konsistenz des Brotes.

Brot hat eine nur begrenzte Haltbarkeit. Sofern die Brotrinde/Brotkruste nicht verletzt ist, hält sich Brot länger, weil die Brotrinde/Brotkruste Feuchtigkeit im Brot zurück hält und Keime und Schimmel vor dem Eindringen in das Innere zurück hält. Bei der Lagerung von Brot durchläuft die Stärke des Brotes einen nicht reversiblen, sogenannten Verkleisterungseffekt. Dabei ändert sich die chemische Struktur der Getreidestärke und dabei wird die Brotkonsistenz hart und "knusprig", was auf einen erhöhten Anteil einer kristallinen Struktur in der Stärke hinweist. Das verkleisterte oder einfach hart gewordene Brot härtet dabei in der Regel von der äußeren Brotrinde/Brotkruste oder dem äußeren Rand nach Innen hin. Diese Verhärtung findet unabhängig von der zur Verfügung stehenden Feuchtigkeit statt. Bei der Verkleisterung ändert sich der Geschmack des Brotes und es wird im Geschmack fad. Der fortschreitende Geschmacksverlust ist noch kein Zeichen für die Ungenießbarkeit des Brotes, weil der menschliche Körper auch verkleisterte Getreidestärke unter Zuhilfenahme der Darmflora aufschließen und verdauen kann.

Auch wenn gelagertes Brot noch genießbar ist, so ist der Geschmack nicht mit dem von frischem Brot zu vergleichen. Die Konsistenz wird je nach Art der Brotrinde/Brotkruste des Brotes gummihaft oder spröde und nur schwer kaubar. Daher gehen viele Brotesser dazu über, altes oder einfach nur gelagertes Brot vor dem Verzehr von der Brotrinde/Brotkruste zu befreien. Auch mögen kleine Kinder in der Regel keine Brotrinde/Brotkruste, weil die Brotrinde/Brotkruste für die ersten Zähne, dem Milchgebiss der Kinder, nur sehr schwer zu kauen ist. Beim Kauen erzeugt die Brotrinde/Brotkruste bei Kindern Reizungen oder Verletzungen des am Zahnrand vorliegenden Zahnfleisches. Auch ist der intensive Geschmack der Brotrinde/Brotkruste für Kinder kein Genuss. Ältere Menschen haben in der Regel Probleme beim Kauen von harter Brotrinde/Brotkruste, weil der Zahnersatz kein so gut zerkleinerndes Kauen mehr zulässt wie mit natürlichen Zähnen. Schließlich ist die verkleisterte Brotrinde/Brotkruste schlichtweg nicht mehr so schmackhaft wie die von frischem Brot.

Wenngleich das Schneiden von Brot am Tisch eine noch akzeptable bis erwünschte Tätigkeit ist, so ist das handhabungsintensive Ausschneiden des Brotkernes oder der Brotscheibe eine eher unappetitliche bis nicht unbedingt einem kultivierten Essen angemessene Handlung. Der Brotesser hantiert dabei mit der Messerspitze auf einer Unterlage oder einem Teller und seziert dabei die Brotscheibe in meist unansehlicher Weise. Dies sieht unschön aus.

In der Deutschen Patentschrift DE 471 467 wird eine Ausstechvorrichtung für ringförmige Elemente offenbart. Diese Ausstechvorrichtung zieht eine ringförmige Teigscheibe zwischen zwei ringförmig konzentrischen Messern ein und eine Ausdrückvorrichtung ist vorgesehen. Diese Vorrichtung ist als reines Backinstrument vorgesehen.

Das Deutsche Gebrauchsmuster DE 1 601 852 U offenbart einen Ausstechersatz für gezackte Formen aus einem Teig. Diese Ausstecher haben nur eine runde, gezackt geformte Klinge mit einem Bördel auf einer der Messerschneide abgewandten Seite. Größere Kräfte zum Durchtrennen der gegebenenfalls harten Brotrinde kann man damit nicht leicht erzeugen ohne dass dies noch eine tischgängige Handlung wäre.

In dem Deutschen Gebrauchsmuster DE 178 8001 ist eine Ausstechvorrichtung für Teigwaren offenbart, die einen Auswerfmechanismus aufweist. Auch diese Ausstechvorrichtung ist nicht geeignet, harte Brotkanten zu stechen.

Schließlich wird in dem Deutschen Gebrauchsmuster DE 1 809 502 U ein Zimtsternstecher offenbart, der zusammengelegt werden kann. Auch dieser Zimtsternstecher ist nicht zum Schneiden von harten Brotkanten geeignet.

Allen Ausstechern oder Stanzen ist gemein, dass sie eine feste Größe aufweisen und daher in der Regel keine an eine Scheibe eines Brotlaibs angepasste Form aufweisen.

Aufgabe der Erfindung ist es daher, eine Vorrichtung zur Verfügung zu stellen, mit der das befreien einer Brotscheibe von Brotrinde oder Brotkruste einerseits angenehm und kultiviert durchzuführen ist und andererseits, was zu ästhetisch schönen und appetitlichen Brotscheiben führt.

Die der Erfindung zu Grunde liegende Aufgabe wird durch ein Brotstanzenset nach den Merkmalen des Anspruchs 1 gelöst. Merkmale weiterer vorteilhafter Ausgestaltungen der Erfindung sind in den Unteransprüchen angegeben.

Nach der Erfindung ist vorgesehen, dass nicht nur eine Brotstanze vorliegt, sondern, dass ein Set aus verschiedenen Brotstanzen vorliegt. Diese Brotstanzen haben die abgeflachte ovale oder die indentierte, also leicht eingedellte ovale Form einer Brotscheibe, die von einem Brotlaib abgeschnitten worden ist. In dem Set haben die verschiedenen Brotstanzen unterschiedliche Größen um Brotscheiben aus der Mitte des Brotlaibes, aus den äußeren Dritteln des Brotlaibes und die Brotenden sowie Brotscheiben aus dem Bereich nahe der Brotenden auszustechen.

In vorteilhafter Weise sind die Größen der Brotstanzen des Brotstanzensets so gewählt, dass sie ineinander gesteckt werden können. Dadurch ist einerseits der Platzbedarf für das Brotstanzenset gering, aber auch die ästhetische Form der Brotstanzen ist dadurch tischgängig für einen kultiviertes Essen.

Die Brotstanzen können aus Hartkunststoff, aus Metall oder aus einem Verbundwerkstoff hergestellt sein. Sogar die Messerklingen der Stanze können aus Kunststoff hergestellt sein, sofern der Kunststoff durch entsprechende Zusätze so hart ist, dass er die Brotrinde/Brotkruste in stanzender Weise schneiden kann. Damit die Brotstanzen nachhaltig eingesetzt werden können, ist einer bevorzugten Ausgestaltung der Erfindung vorgesehen, dass die Brotstanzen nicht wie Teigausstecher durch scharfe Blechkanten gebildet werden, sondern, dass sie nachschärfbare Klingen aus Metall aufweisen. Einerseits können die Brotstanzen dadurch länger eingesetzt werden, aber auch das Stanzergebnis ist gerade für die Verwendung von harten Brotrinde/Brotkruste geeignet. Die teilweise Verkohlung der Brotrinde/Brotkruste hat auch zur Folge, dass in dem Getreidemehl vorhandenes Silikat sich zu Siliziumdioxid umsetzt, was beim Stanzen der Brotrinde die Klinge der Brotstanze stark beanspruchen und abstumpfen kann. Durch die nachschärfbare Eigenschaft ist die Brotstanze mit wenig Kraftaufwand einsetzbar, was dazu führt, dass die Brotstanze am Tisch einsetzbar ist.

Da die Brotstanzen beim Einsatz mit dem noch frischen oder feuchten Brotinneren mit vergleichsweise großem Kraftaufwand in Berührung kommen, setzt sich gegebenenfalls das Innere der Brotmasse an der Klinge ab und verhärtet dort schon innerhalb sehr kurzer Zeit. Um die Brotstanzen besser reinigen zu können, ist nach einer weiteren bevorzugten Ausgestaltung der Erfindung vorgesehen, dass die Brotstanzen spülmaschinengängig sind. Dies unterscheidet die Brotstanzen nach der Erfindung von den allgemein bekannten Teigausstechern, die in der Regel aus verzinktem Blech hergestellt werden und in einer Spülmaschine beginnen, zu rosten. Das Material der Brotstanze muss also den basischen Bedingungen unter Hitze in einer Spülmaschine standhalten können.

In vorteilhafter Weise ist die Brotstanze eine in die Form der zu stechenden Brotscheibe gebogene Messerklinge, die einen Handgriff aufweist, mit dem auch höhere Kräfte auf die zu stanzende Brotscheibe ausgeübt werden können. Der Handgriff ist dabei an den beiden äußeren Enden oder Kurven des abgeflachten Ovals oder des eingedellten indentierten Ovals einer Brotscheibe angebracht. Die äußeren Enden der typischen Brotscheibe sind die Teile des Ovals mit den kleineren Krümmungsradien.

In bevorzugter Ausführungsform der Erfindung ist vorgesehen, dass der Handgriff jeweils einer Brotstanze des Sets eine Vorrichtung zum Verbinden mit einer jeweils anderen Brotstanze des Sets aufweist, so dass die beiden miteinander verbundenen Brotstanzen des Sets ineinander stecken und dabei miteinander verbunden sind. Beim Ineinanderstecken der Brotstanzen ist also vorgesehen, dass ein Handgriff an den Handgriff einer weiteren Stanze ragt und dabei mit dieser verrastet, mit dieser magnetisch aneinander haftet oder mit sonstigen bekannten Mitteln ineinander greift.

Als nicht nur elegante, sondern auch handschonende Ausführungsform der Erfindung ist vorgesehen, dass der Handgriff einer Brotstanze aus einem Verbundmaterial besteht, das ein Verbundmaterial aus Holz und Metall sein kann oder auch ein Verbundmaterial aus Metall und Kunststoff oder die Kombination beider Verbundmaterialien. Die Verbundstoffe haben den Vorteil der Stabilität des Metalls und der angenehmen Griffigkeit des Holzes und/oder des Kunststoffes.

Eine sehr bevorzugte Ausführungsform der Erfindung weist eine Vorrichtung zur Lagerung und zum Schutz vor der Schneidwirkung der Klingen auf. Die Klingen der einzelnen Brotstanzen sind dabei bevorzugt in einer an die Form der Brotstanze angepassten Nut in einer Platte auf Kunststoff oder aus Holz aufgenommen, und zwar in einer Weise, dass die einzelnen Brotstanzen dabei ineinander stecken. Diese Aufbewahrungsplatte als Vorrichtung zur Aufnahme der einzelnen Brotstanzen des Sets zur Lagerung ist also so geformt, dass die Vorrichtung die Messerklingen der Stanzenseite der einzelnen Brotstanzen zum Schutz vor Schneidverletzungen aufnimmt.

Je nach Einsatz der Brotstanzen kann vorgesehen sein, dass der Messerklingen der Brotstanzen einen glatten Schliff oder einen Sägeschliff aufweisen. Dabei kann auch vorgesehen sein, dass die Messerklingen der größeren Brotstanzen einen glatten Schliff aufweisen und das die kleineren Brotstanzen, die in der Regel die härtere Brotrinde/Brotkruste am Brotende schneiden oder stanzen, mit einem Sägeschliff versehen sind.

Damit die Brotstanzen besonders hygienisch sind, ist nach einem bevorzugten Merkmal der Erfindung vorgesehen, dass zumindest die Klingen der jeweils einzelnen Brotstanze mit einer haftungsarmen Beschichtung versehen sind. Dies kann eine Teflonbeschichtung sein, eine Beschichtung aus Kunststoff, eine Beschichtung mit einem hochfluoridiertem Kunststoff oder andere bekannte Beschichtungen, die zu einer Haftungsverringerung führen. Dadurch ist nicht nur eine gute Reinigungsfähigkeit gegeben, sondern auch noch, dass sich die gestanzte Brotscheibe darin leicht auslöst.

Die Erfindung wird anhand der folgenden Figuren näher erläutert.

Es zeigt:
- Figur 1: eine Skizze des erfindungsgemäßen Brotstanzensets,
- Figur 3: die einzelnen Brotstanzen aus Figur 1 in einer Aufsicht,

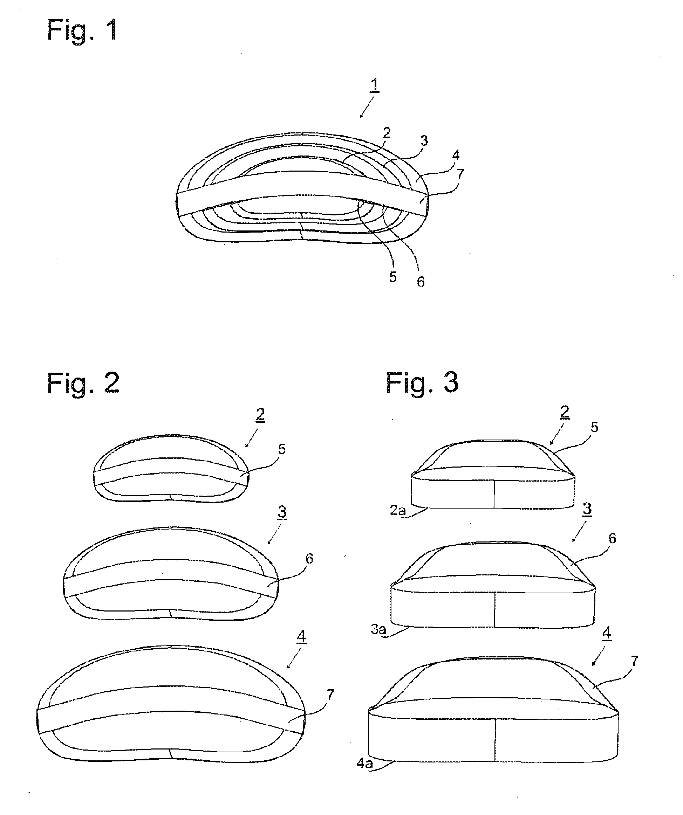

- Figur 3: die einzelnen Brotstanzen aus Figur 1 in einer perspektivischen Ansicht,

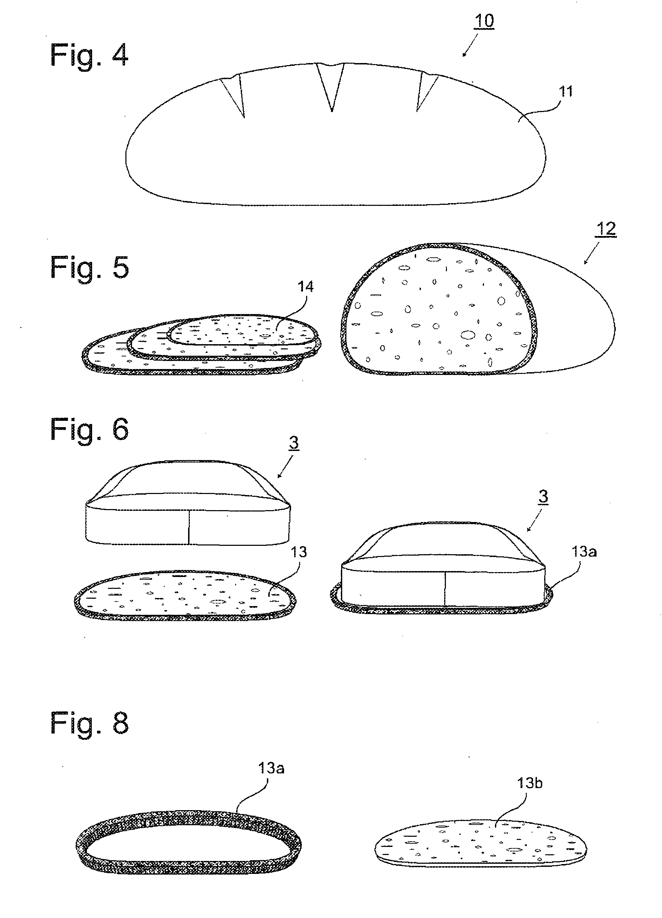

- Figur 4: ein Brotlaib,
- Figur 5: ein geschnittenes Brotlaib mit zwei unterschiedlich großen Brotscheiben,
- Figur 6: eine Brotstanze des Brotstanzensets kurz vor dem Stanzvorgang und daneben die Brotstanze beim Stanzvorgang,
- Figur 8: eine abgetrennte Brotrinde oder Brotkruste mit daneben liegender Brotrinde/Brotkruste,

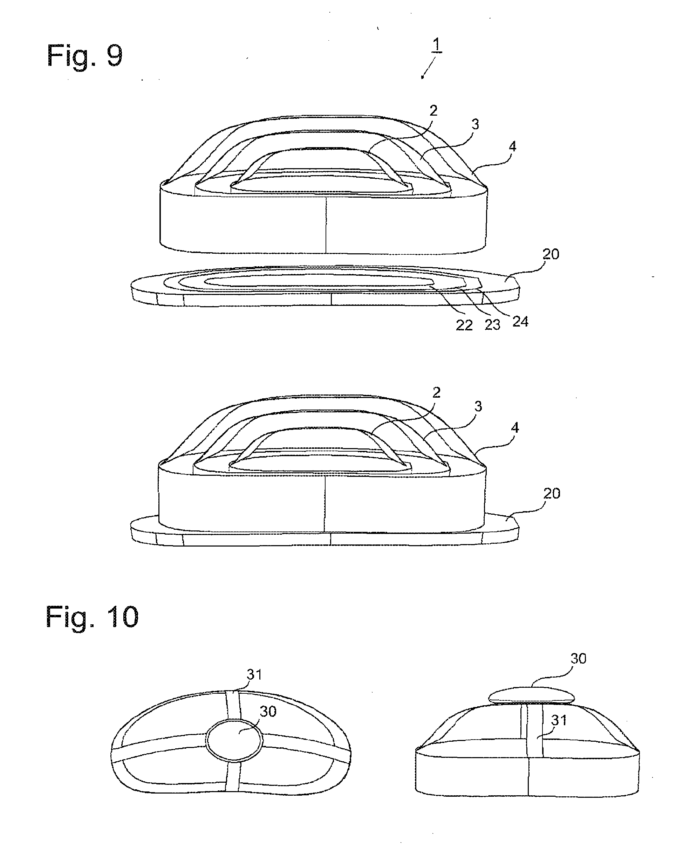

- Figur 9: Brotstanzenset mit Aufbewahrungsvorrichtung,
- Figur 10: einzelne Brotstanze mit Knauf,

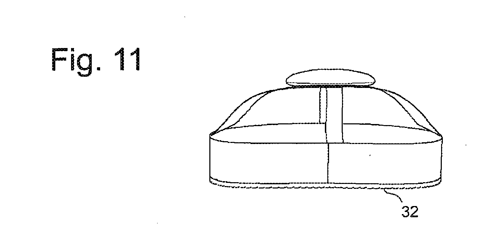

- Figur 11: Brotstanze mit Wellenklinge.

In Figur 1 ist ein Brotstanzenset 1 in einer perspektivischen Ansicht von oben dargestellt. In der Skizze nach Figur 1 sind beispielhaft drei Brotstanzen 2, 3 und 4 ineinander gesteckt, aber es ist nach dem Gedanken der Erfindung auch möglich, zwei oder auch mehr als drei Brotstanzen ineinander zu stecken und als Set im Wesen der Erfindung als Brotstanzenset zu betrachten. Die Brotstanzen 2, 3 und 4 weisen eine abgeflachte ovale Form oder eine sogar indentierte, also eingedellte, ovale Form auf, die an die typische Form einer Brotscheibe von einem in Laibform gebackenen Brot angepasst ist. Damit die Brotscheiben in angenehmer Weise gestanzt werden können, ist nach der Erfindung vorgesehen, dass der Handgriff 5, 6 und 7 jeweils einer Brotstanze 2, 3 und 4 an den Querseiten oder den Enden der Brotscheibenform mit den kleineren Radien angebracht ist. Auf diese Weise lässt sich die einzelne Brotstanze 2, 3 oder 4 vom Nutzer bequem mit der Hand greifen und im Querformat auf einem vor dem Nutzer liegenden Teller oder Schneidbrettchen stanzen. Die einzelnen Brotstanzen 2, 3 und 4 sind in Figur 2 als einzelne Brotstanzen 2, 3 und 4 mit unterschiedlichen Größen dargestellt, wobei die Gesamtheit der Größen angepasst ist beispielsweise an ein typisches 750 g Brot in Laibform, wobei die größte Größe der einzelnen Brotstanzen 2, 3 und 4 angepasst ist an die Größe einer Brotscheibe aus der Mitte des Brotlaibes, die nächst kleinere Größe an eine Brotscheibe aus der äußeren Brotkruste oder dem Drittel des Brotlaibes und die kleine Größe ist angepasst an ein Brotende oder umgangssprachlich den "Knust". Um die Form der jeweils einzelnen Brotstanze 2, 3 und 4 besser erkennen zu können, ist in Figur 3 das Brotstanzenset 1 mit drei Brotstanzen 2, 3 und 4 übereinander in einer Ansicht von der vorderen, indentierten Seite dargestellt. Der Stanzvorgang ist in en Figuren 4 bis 8 näher dargestellt.

In Figur 4 ist ein gattungsgemäßes Brot, beispielsweise ein 750 g schweres Brot 10 mit einfacher Brotrinde/Brotkruste 11 dargestellt. Dieses Brot 10 ist nach Schnitt etwa hälftig geteilt, wie es in Figur 5 auf der rechten Seite dargestellt ist. Links neben dem halben Brotlaib 12 sind zwei Scheiben Brot 13 und 14 unterschiedlicher Größe dargestellt, wobei eine kleinere Scheibe 14 auf der größeren Scheibe 13 aufliegt. In Figur 6 ist eine Brotstanze 3, die an die Größe der Brotscheibe 13 angepasst ist, kurz vor dem Stanzvorgang dargestellt, wie sie sich über der Brotscheibe 13 befindet. In der in Figur 6 auf der rechten Seite dargestellten Weise stanzt nun die Brotstanze 3 die Brotscheibe 13 in zwei Teile, nämlich die außen verhandene ringförmige Brotrinde/Brotkruste 13a und die innerhalb der Brotstanze 3 verbleibende, rindenlose Brotscheibe 13b, die beide in Figur 8 perspektivisch skizziert sind. Die Brotrinde/Brotkruste 13a ist in dieser Darstellung bereits relativ dick, was bei beginnendem Austrocknen von Brot gelegentlich der Fall ist. Genau diese trockene und nicht mehr gut schmeckende und gegebenenfalls schwer kaubare Brotrinde/Brotkruste 13a soll nach dem Gedanken der Erfindung vom Rest der Brotscheibe 13b abgetrennt werden.

In Figur 9 ist schließlich eine Vorrichtung 20 zur Aufbewahrung der Brotstanzen 2, 3 und 4 dargestellt. Diese Vorrichtung 20 ist eine an die äußere Form der Brotstanzen 2, 3 und 4 angepasst und weist für die hier beispielhaft drei Brotstanzen 2, 3 und 4 drei dazu korrespondierende Nuten 22, 23 und 24 auf, in welche die Klingen 2a, 3a und 4a der Brotstanzen 2, 3 und 4, die in Figur 3 abgebildet sind, hineinpassen. Zum Aufbewahren werden die einzelnen Brotstanzen 2, 3 und 4 in diese Nuten 22, 23 und 24 hineingesteckt und sind dadurch fixiert und andererseits schützt die Vorrichtung 20 vor der Schneidwirkung der scharfen Messerklingen 2a, 3a und 4a der Brotstanzen 2, 3 und 4.

In Figur 11 ist eine bevorzugte Ausgestaltung einer einzelnen Brotstanze dargestellt, die anstelle eines einfachen Griffs einen zentralen Knauf 30 aufweist, der mit Verstärkungen 31 an der Messerklinge abgebracht ist. Der Knauf lässt einen hohen Druck mit der Handfläche auf die Brotstanze ausüben, ohne, dass dabei die Gefahr einer Handverletzung besteht.

Um die Schneidwirkung zu verbessern, kann, wie es in Figur 11 dargestellt ist, ein Wellenmesser vorgesehen, sein, das anders als ein Wellenschliff, der auf eine Ebene Messerklinge aufgebracht wird, einen wellenförmigen Verlauf quer zur Messerebene zeigt. Das Wellenmesser erzeugt ein leicht zackenförmiges Muster, was bei einem ausgestanzten Brot auch ästhetischer aussieht.

### BEZUGSZEICHENLISTE

| | | | |
|---|---|---|---|
| 1 | Brotstanzenset | 13a | Brotrinde/Brotkruste |
| 2 | Brotstanze | 13b | rindenlose / krustenlose Brotscheibe |
| 2a | Messerklinge | | |
| 3 | Brotstanze | 14 | Brotscheibe (groß) |
| 3a | Messerklinge | | |
| 4 | Brotstanze | 20 | Vorrichtung zur Aufbewahrung |
| 4a | Messerklinge | 22 | Nut |
| 5 | Handgriff | 23 | Nut |
| 6 | Handgriff | 24 | Nut |
| 7 | Handgriff | | |
| | | 30 | Knauf |
| 10 | Brotlaib | 31 | Verstärkung |
| 11 | Brotrinde | 32 | Wellenmesser |
| 12 | halbes Brotlaib | | |
| 13 | Brotscheibe klein) | | |

## Patentansprüche

1. Brotstanzenset (1) bestehend aus mindestens zwei Brotstanzen (2, 3, 4) zum manuellen Austanzen von randlosen Brotscheiben (13b) aus einer Brotscheibe (13) mit Brotrinde/Brotkruste (13a), wobei die einzelnen Brotstanzen (2, 3, 4) jeweils einen Handgriff (5, 6, 7) aufweisen,
**dadurch gekennzeichnet, dass**
die Form der einzelnen Brotstanzen (2, 3, 4) dem Umfangsverlauf eines Profils eines Brotlaibs (10) in Form eines abgeflachten bis indentierten Ovals entspricht und wobei die Brotstanzen (2, 3, 4) eine unterschiedliche Größe aufweisen.

2. Brotstanzenset nach Anspruch 1,
**dadurch gekennzeichnet, dass**
die Größe der einzelnen Brotstanzen (2, 3, 4) so aneinandergepasst ist, dass sie ineinander gesteckt werden können.

3. Brotstanzenset nach einem der Ansprüche 1 oder 2,
**dadurch gekennzeichnet, dass**
die einzelnen Brotstanzen (2, 3, 4) jeweils eine Messerklinge (2a, 3a, 4a) an der Stanzseite aufweisen, die nachschärfbar ist.

4. Brotstanzenset nach einem der Ansprüche 1 bis 3,
**dadurch gekennzeichnet, dass**
die einzelnen Brotstanzen (2, 3, 4) spülmaschinengängig sind.

5. Brotstanzenset nach einem der Ansprüche 1 bis 4,
**dadurch gekennzeichnet, dass**
die einzelnen Brotstanzen (2, 3, 4) aus einer gebogenen Messerklinge bestehen, wobei der Handgriff (5, 6, 7) der jeweils einzelnen Brotstanze (2, 3, 4) jeweils an die beiden äußeren Kurven der jeweils kleineren Radien der indentierten oder abgeflachten Ovale der jeweiligen einzelnen Brotstanze (2, 3, 4) angreifen.

6. Brotstanzenset nach einem der Ansprüche 1 bis 5,
**dadurch gekennzeichnet, dass**
der Handgriff (5, 6, 7) jeweils einer Brotstanze (2, 3, 4) eine Vorrichtung (20) zum Verbinden mit einer jeweils anderen Brotstanze (2, 3, 4) aufweist, so dass jeweils zwei miteinander verbundene Brotstanzen (2, 3, 4) ineinander stecken und dabei miteinander verbunden sind.

7. Brotstanzenset nach einem der Ansprüche 1 bis 6,
**dadurch gekennzeichnet, dass**
der Handgriff (5, 6, 7) jeweils einer Brotstanze (2, 3, 4) aus einem Metall-Holz und/oder aus einem Metall-Kunststoff-Verbund besteht.

8. Brotstanzenset nach einem der Ansprüche 1 bis 7,
**dadurch gekennzeichnet, dass**
eine Vorrichtung (20) zur Aufnahme der einzelnen Brotstanzen (2, 3, 4) zur Lagerung vorgesehen ist, wobei die Vorrichtung (20) die Messerklingen (2a, 3a, 4a) der Stanzenseite der einzelnen Brotstanzen (2, 3, 4) zum Schutz vor Schneidverletzungen aufnimmt.

9. Brotstanzenset nach einem der Ansprüche 3 bis 8,
dass die Messerklingen der einzelnen Brotstanzen des Sets einen Sägeschliff aufweisen.

10. Brotstanzenset nach einem der Ansprüche 3 bis 9,
**dadurch gekennzeichnet, dass**
die Messerklingen (2a, 3a, 4a) der einzelnen Brotstanzen (2, 3, 4) eine haftungsarme Beschichtung aufweisen.
